# EUROPÄISCHE PATENTSCHRIFT

(11) **EP 2 041 530 B1**
(45) Veröffentlichungstag und Bekanntmachung des Hinweises auf die Patenterteilung: **25.10.2017**
(21) Anmeldenummer: 07785656.5
(22) Anmeldetag: 18.07.2007
(51) Int. Cl.: G01F 23/296

(54) **MEHRKAMMERULTRASCHALLSENSOR ZUR BESTIMMUNG EINES FLÜSSIGKEITSPEGELS**
MULTICHAMBER ULTRASONIC SENSOR FOR DETERMINING A LIQUID LEVEL
CAPTEUR À ULTRASONS À PLUSIEURS CHAMBRES DESTINÉ À DÉTERMINER UN NIVEAU DE LIQUIDE

(30) Priorität: 18.07.2006 DE 102006033592; 25.08.2006 DE 102006039872
(43) Veröffentlichungstag der Anmeldung: 01.04.2009
(73) Patentinhaber: Conti Temic Microelectronic GmbH, 90411 Nürnberg (DE)
(72) Erfinder: BEYER, Oliver, 91056 Erlangen (DE); GROTEVENT, Henning, 90429 Nürnberg (DE); HARIGEL, Bernd, 73119 Zell unter Aichelberg (DE); ROTH, Manfred, 90613 Grosshabersdorf (DE); UNVERZAGT, Gerd, 90461 Nürnberg (DE); WEIBERT, Andreas, 90443 Nürnberg (DE)
(74) Vertreter: Bonn, Roman Klemens
(86) Internationale Anmeldenummer: PCT/DE2007/001287
(87) Internationale Veröffentlichungsnummer: WO 2008/009277

(56) Entgegenhaltungen:
- EP-A- 0 653 611
- EP-A- 1 081 470
- DE-A1- 10 350 084

## Beschreibung

Die Erfindung betrifft einen Ultraschallsensor zur Bestimmung eines Flüssigkeitspegels gemäß dem Oberbegriff des Anspruchs 1.

Derartige Sensoren werden unter anderem in der Kraftfahrzeugtechnik zur Messung des Pegels des Motoröls oder des Kraftstoffs eingesetzt. Ein Sensor am Behälterboden sendet Ultraschallimpulse aus. Das Echo von der Flüssigkeitsoberfläche wird vom Sendeempfänger wieder aufgenommen. Der Füllstand ist proportional der Schalllaufzeit. Gemäß der deutschen Patentanmeldung DE 33 30 059 A1 wird der Schall durch eine in einem Behälter angeordnete Hohlleitung oder Schallführungsrohr geführt. Am unteren Ende des Schallführungsrohres ist der Ultraschall-Sendeempfänger angebracht. Das Rohr befindet sich in der Flüssigkeit und ist über mindestens eine Ausgleichsöffnung so weit mit Flüssigkeit gefüllt, wie es dem Füllstand im Behälter entspricht. In dem Schallführungsrohr, das gekrümmt sein kann, wird der Füllstand mit Ultraschall gemessen. Eine solche Ausführungsform soll sich vor allem zur Messung des Füllstandes bei unregelmäßig geformten Flüssigkeitsbehältern eignen. Ein großer Nachteil dieser Anordnung ist, dass Schaum aus der zu bestimmenden Flüssigkeit in das Schallführungsrohr eindringen und die Bestimmung des Flüssigkeitspegels leicht verfälschen kann.

Die Problematik der Schaumbildung bei einem auf Ultraschall basierenden Sensor zur Bestimmung des Flüssigkeitspegels liegt insbesondere beim Motoröl darin, dass durch Umwälzungen des Öles beim Betrieb des Motors Lüftbläschen verschiedener Größen entstehen. Diese Luftbläschen haben abhängig von ihrer Größe die Eigenschaft, Ultraschallsignale entweder zu streuen oder zu reflektieren. Unter diesen Umständen kann eine hinreichend genaue und fehlerfreie Messung nicht garantiert werden.

Ein bisheriger Lösungsansatz, durch ein feinmaschiges Sieb (Maschenweite ca. 60µm), die Luftbläschen außerhalb der Messkammer zu halten, führt zu keinem befriedigenden Ergebnis. Das Eindringen von Luftbläschen wird durch das Sieb zwar verhindert, doch scheitert diese Methode an den Schmutzpartikeln und sonstigen Eintragungen im Öl. Durch diese Partikel setzt sich das Sieb nach kürzester Zeit zu, so dass kein Angleichen des Pegels in der Messkammer an den zu bestimmenden Pegel des Öls im Motor mehr möglich ist. Ein Betrieb des Sensors im Motor kann so nicht über die gesamte Lebensdauer garantiert werden. EP 0 653 611 A1 offenbart einen Ultraschallsensor gemäß dem Oberbegriff des Anspruchs 1. Hiervon ausgehend liegt der Erfindung die Aufgabe zugrunde, einen Ultraschallsensor der eingangs genannten Art anzugeben, der durch seinen geometrischen Aufbau verhindert, dass Luftbläschen in die Messkammer eindringen, und der somit eine permanente und zuverlässige Bestimmung des Flüssigkeitspegels ermöglicht.

Diese Aufgabe wird erfindungsgemäß durch einen Ultraschallsensor gemäß dem Oberbegriff des Anspruchs 1 durch die Merkmale des kennzeichnenden Teils des Anspruchs 1 gelost.

Im Gehäuse des Sensors sind neben der Messkammer wenigstens zwei weitere Kammern zumindest teilweise vor der Messkammer oder zumindest teilweise um die Messkammer angeordnet, wobei die äußerste Kammer die Einlasskammer bildet. Damit die Flüssigkeit von der Einlasskammer in die Messkammer gelangen kann, stehen die Kammern miteinander in Verbindung.

Die Einlasskammer und die Messkammer weisen seitlich, jeweils in einer Höhe nahe dem Boden des Gehäuses, eine Öffnung zum Ein- und Ausströmen der Flüssigkeit auf. Damit der Weg, den die Flüssigkeit von der Einlasskammer in die Messkammer zurückgelegt, und somit die Zeit, in der vorhandene Luftblasen an die Oberfläche der Flüssigkeit steigen können, möglichst lang ist, sind die Öffnung in die Einlasskammer und die Öffnung in die Messkammer in der Regel radial möglichst weit voneinander entfernt angeordnet.

Die Luft, die von der Oberflache aus der Flüssigkeit entweicht, kann durch wenigstens eine Gehäuseentlüftungsöffnung, die im Deckel oder an einer Außenseite der Einlasskammer in einer Höhe nahe dem Deckel angeordnet ist, den Sensor verlassen.

Es ist aber darauf zu achten, dass der Deckel wenigstens im Bereich der Messkammer geschlossen ist. Dadurch wird verhindert, dass Flüssigkeit aus der Umgebung des Sensors, die mit großer Wahrscheinlichkeit Luftbläschen enthält, direkt in die Messkammer gelangen kann.
Der Druckausgleich in der Messkammer wird insbesondere dadurch hergestellt, dass an der Außenseite der Messkammer in einer Höhe nahe dem Deckel, insbesondere oberhalb des maximal messbaren Flüssigkeitspegels, wenigstens eine Entlüftungsöffnung in die Kammern außerhalb der Messkammer aufweist.

Der Flüssigkeitspegel in der Messkammer ist aus dem Laufzeitverhältnis des an der Oberfläche der Flüssigkeit und an einem Kalibrierreflektor reflektierten Signals ermittelbar. Dabei ist der Kalibrierreflektor in der Messkammer vorzugsweise unterhalb des minimal möglichen Flüssigkeitspegels angeordnet.

Der Querschnitt der Kammern kann von Kammer zu Kammer verschieden sein. Das hängt unter anderem von der Geometrie des Einbauortes ab. So kann die Einlasskammer zum Beispiel einen im wesentlichen runden und die Messkammer einen im wesentlichen rechteckigen Querschnitt aufweisen.

Die Außenseiten der Kammern, die zwischen der Einlasskammer und der Messkammer angeordnet sind, sind insbesondere als Wände ausgestaltet, die sich vom Boden höchstens bis zu einer Höhe knapp unterhalb des minimal messbaren Flüssigkeitspegels der Messkammer erstrecken. Die Flüssigkeit gelangt durch die Einlassöffnung in die Einlasskammer. Die Einlasskammer füllt sich bis zur Höhe der Außenseite der nächsten Kammer. Es fließt weiter Flüssigkeit durch die Einlassöffnung nach und schwappt förmlich über die Wand in die nächste Kammer und so weiter. Die Luftblasen steigen während dieser Zeit an die Oberfläche der Flüssigkeit und lösen sich auf. Die Flüssigkeit in der Kammer vor der Messkammer ist dann vorteilhafter Weise bereits blasenfrei.

Damit bei einer Erhöhung des Flüssigkeitspegels in der Kammer vor der Messkammer aus dieser Kammer nur blasenfreie Flüssigkeit in die Messkammer gelangen kann, sind vorzugsweise die Höhe und die Länge der Außenseite dieser Kammer so bemessen, dass das Flüssigkeitsfassungsvermögen dieser Kammer größer ist, als das Fassungsvermögen der Messkammer selbst.

Alternativ kann die Außenseite der Kammern, die zwischen der Einlasskammer und der Messkammer angeordnet sind, sich vom Boden bis zum Deckel erstrecken. Damit daraus die sich aus den sich auflösenden Luftblasen bildende Luft entweichen kann, ist an der Außenseite dieser Kammern jeweils nahe dem Deckel wenigstens eine Entlüftungsöffnung angeordnet. Damit die Flüssigkeit von der Einlasskammer in die Messkammer gelangen kann, ist an jeder dieser Außenseiten wenigstens eine Öffnung zum Ein- und Ausströmen der Flüssigkeit angeordnet. Dabei befindet sich diese Öffnung an der Außenseite zumindest der Kammer, die der Messkammer am nächsten ist, zwischen Boden und Deckel in einer Höhe unterhalb des minimal messbaren Flüssigkeitspegels. Analog zu der vorher beschriebenen Ausführungsform gilt auch hier, dass das Fassungsvermögen der Kammer vor der Messkammergrößerist als das Fassungsvermögen der Messkammer selbst.

In einer weiteren Variante sind die Außenseiten der Kammern, die zwischen der Einlasskammer und der Messkammer angeordnet sind, als Wände ausgestaltet sind, die sich vom Boden wenigstens bis zu einem Höhen oberhalb des maximal messbaren Flüssigkeitspegels erstrecken. Damit die Flüssigkeit von der Einlasskammer in die Messkammer gelangen kann, weisen diese Außenseiten der Kammern in einer Höhe nahe dem Boden des Gehäuses jeweils eine Öffnung zum Ein- und Ausströmen der Flüssigkeit aufweisen. Um den Weg, den die Flüssigkeit dabei zurücklegen muss und somit die Zeit, in der sich die Flüssigkeit und die Luftblasen entmischen können, möglichst lang zu gestalten, sind die Öffnungen derart angeordnet, dass die in Richtung Messkammer aufeinanderfolgenden Öffnungen möglichst weit voneinander entfernt liegen.

Bei einer zur zuletzt beschriebenen Ausführungsform des Sensors leicht abgewandelten Version erstrecken sich die Wände der Kammern zwischen der Einlasskammer und der Messkammer bis zum Deckel. Entlüftungsöffnungen nahe dem Deckel sorgen für den nötigen Druckausgleich in die Einlasskammeroder in die äußere Umgebung.

Ferner ist wenigstens zwischen zwei Kammern eine Trenneinrichtung derart vorgesehen, dass die Fließrichtung der Flüssigkeit auf ihrem

Weg von einer Kammer in die nächste Kammer durch die jeweilige Öffnung zum Ein- und Ausströmen vorgegeben ist. Vorzugsweise wird dadurch die Fließrichtung von aufeinander folgenden Kammern umgedreht und somit der Fließweg der Flüssigkeit von der Einlassöffnung der Einlasskammer bis zur Messkammer möglichst lange gestaltet. Diese Trenneinrichtung kann zum Beispiel bei einem Sensor aus konzentrisch angeordneten Rohren insbesondere durch einen innerhalb einer Kammer radial verlaufenden Trennsteg realisiert sein. Die gleiche Trennwirkung kann auch dadurch erzielt werden, wenn sich jeweils die Außenseiten zweier aufeinanderfolgender Kammern zumindest an einer Stelle vorzugsweise über die gesamte Höhe berühren.

Eine weitere Möglichkeit, die Fließgeschwindigkeit der Flüssigkeit zu beeinflussen, ist die Anbringung von Zwischenstegen innerhalb einer Kammer. Die Fließgeschwindigkeit wird dann insbesondere durch den Querschnitt und den Anbringungsort einer am Zwischensteg befindlichen Zwischenöffnung bestimmt. Die Zwischenöffnung ist vorzugsweise in einer Höhe nahe dem Boden des Gehäuses angeordnet ist.

Für Ausführungsformen, bei denen die Flüssigkeit auf dem Weg von einer Kammer in die nächste durch bodennahe Öffnungen geführt wird, müssen die vorhandenen Trenneinrichtungen und Zwischenstege höher sein als der maximal mögliche Flüssigkeitspegel.

Weitere Merkmale, Vorteile und Einzelheiten der Erfindung sind der nachfolgenden Beschreibung entnehmbar, in der bevorzugte Ausführungsbeispiele anhand der beigefügten Zeichnungen näher erläutert werden. Es zeigen:
- Fig. 1: eine Schnittdarstellung eines Ultraschallsensors mit drei Kammern, ohne Flüssigkeit,
- Fig. 2: eine Draufsicht des Sensors aus Fig. 1 in der Ebene A-A,
- Fig. 3: eine Schnittdarstellung wie in Fig.1, mit Flüssigkeit und umgebendes System nicht in Betrieb,
- Fig. 4: eine Schnittdarstellung wie in Fig.1, mit Flüssigkeit und umgebendes System in Betrieb,
- Fig. 5: eine Schnittdarstellung wie in Fig.1, Flüssigkeit weitgehend abgelassen,
- Fig. 6: eine Schnittdarstellung wie in Fig.1, Außenwand der Kammer vor der Messkammer bis zum Deckel und Öffnung in Höhe unterhalb minimal messbarem Flüssigkeitspegel,
- Fig. 7: eine Schnittdarstellung wie in Fig. 6, Öffnung in Höhe nahe dem Boden,
- Fig. 8: eine Draufsicht des Sensors aus Fig. 7 in der Ebene A-A,
- Fig. 9: eine Draufsicht eines Sensors in der Ebene A-A, mit Trennstegen und Zwischenstegen,
- Fig. 10: eine Draufsicht eines Sensors in der Ebene A-A, mit einem Trennsteg und einer weiteren Trenneinrichtung,
- Fig. 11: eine Draufsicht eines Sensors in der Ebene A-A mit rechteckigem Querschnitt und mit einem Trennsteg in der Einlasskammer, wobei Kammern zumindest teilweise vor und um die Messkammer angeordnet sind.

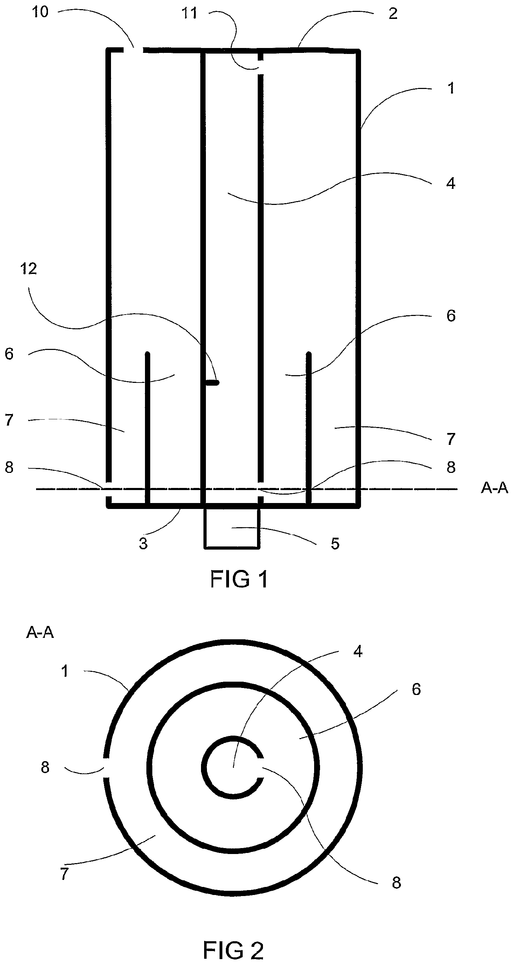

Nachfolgend wird ein Ultraschallsensor, oder kurz Sensor, beschrieben, wie er zum Beispiel in Kraftfahrzeugen zum Messen des Motorölpegels verwendet wird. Dabei ist der Pegel im Sensor und im Motor selbst identisch und der Messbereich des Sensors liegt in der Regel zwischen einem minimalen und einem maximalen Wert. Fig. 1 und Fig.2 zeigen einen Sensor mit drei Kammern (4, 6, 7) ohne Flüssigkeit. Der Querschnitt ist rund und die einzelnen Kammern (4, 6, 7) werden durch konzentrisch angeordnete Rohre gebildet. Das äußere Rohr ist mit einem Boden (3) und einem Deckel (2) abgeschlossen und bildet das Gehäuse (1) des Sensors. Das mittlere Rohr erstreckt sich vom Boden (3) bis zum Deckel (2) und bildet die Messkammer (4). Die äußere Kammer, auch als Einlasskammer (7) bezeichnet, und die Messkammer (4) besitzen jeweils an ihrer Außenseite nahe dem Boden (3) eine Öffnung (8) zum Ein- und Ausströmen des Motoröls. Die Einlasskammer (7) und die Messkammer (4) schließen eine weitere Kammer (6) ein, wobei die Außenseite dieser Kammer (6) durch die Innenseite der Einlasskammer (7) und die Innenseite der Kammer (6), durch die Messkammer (4) gebildet wird. Die Außenseite der Kammer (6) bildet eine Wand, die sich vom Boden (3) bis knapp unterhalb des minimal zu messenden Pegels erstreckt. Außerhalb des Gehäuses (1), am Boden im Bereich der Messkammer (4), ist ein Ultraschall-Sendeempfänger (5) angebracht.

Bei der Erstbefüllung gelangt das Öl durch die bodennahe Öffnung (8) in die Einasskammer (7). Die Einlasskammer (7) füllt sich bis zur Höhe der Außenseite der nächsten Kammer (6). Fließt weiter Öl durch die Öffnung (8) nach, schwappt es förmlich über die Wand in die nächste Kammer (6). Die Luftblasen steigen während dieser Zeit an die Oberfläche des Öls und lösen sich auf. Von der Kammer (6) gelangt das Öl durch die bodennahe Öffnung (8) in die Messkammer (4).

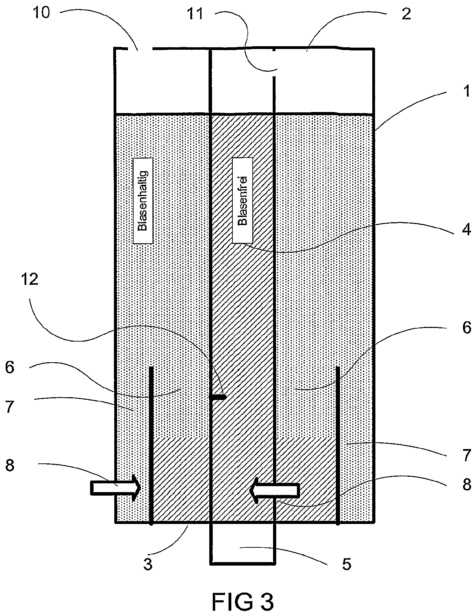

Fig. 3 zeigt die Verhältnisse im Sensor, wie sie sich insbesondere darstellen, wenn das umgebende System, sprich der Motor nicht im Betrieb ist. Die Messkammer (4) und insbesondere der maßgebliche untere Bereich der vorgelagerten Kammer (6) sind blasenfrei. Die aus dem restlichen Öl entweichende Luft kann durch eine Gehäuseentlüftungsöffnung (10) im Randbereich des Deckels (2) entweichen. Der Deckel ist im Bereich der Messkammer (4) geschlossen, wodurch verhindert wird, dass blasenhaltiges Öl von oben aus dem Motorraum direkt in die Messkammer (4) eindringen kann. Die Gehäuseentlüftungsöffnung (10) könnte auch an der Außenseite der Einlasskammer (7), bevorzugt in der Nähe des Deckels (2) vorgesehen sein.

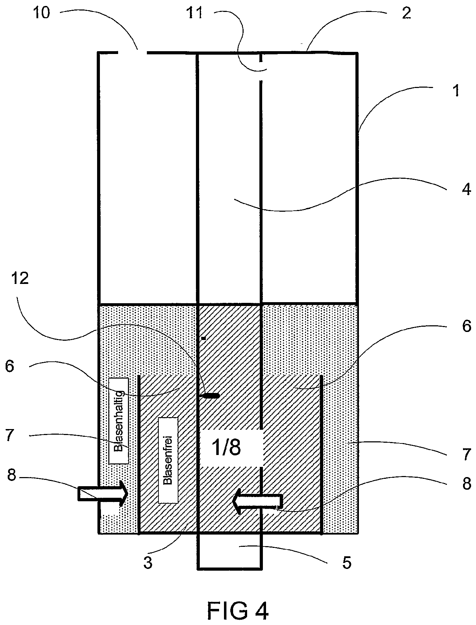

Fig. 4 zeigt die Verhältnisse im Sensor, wie sie möglich sind, wenn der Motor im Betrieb ist. Das Öl wird durch die sich bewegenden Teile wie Kurbelwelle und Pleuel im Motor verteilt. Dadurch sinkt der Pegel in der Ölwanne, also auch im Sensor. Die durch Pegeländerungen verursachten Druckschwankungen in der Messkammer (4) werden durch die deckelnahe Entlüftungsöffnung (11) an der Außenseite der Messkammer ausgeglichen. In der der Messkammer (4) vorgelagerten Kammer (6) befindet sich vorzugsweise nur blasenfreies Öl. Fließt Öl durch die Öffnung (8) in die Einlasskammer (7) nach, wird aus der Kammer (6) blasenfreies Öl in die Messkammer (4) nachgedrückt. Dadurch, dass insbesondere das Fassungsvermögen der Kammer (6) durch die Auslegung der Höhe und der Länge der diese Kammer (6) umgebenden Wand größer ist, als das der Messkammer (4), ist sicher gestellt, dass sich bei allen möglichen Pegeländerungen nur blasenfreies Öl in der Messkammer befindet. Die Messung der Laufzeit der vom Ultraschall-Sendeempfänger ausgesendeten und am Kalibrierreflektor (12) beziehungsweise an der Oberfläche des in der Messkammer (4) befindlichen Öls reflektierten Ultraschallsignale wird somit vorteilhafter Weise zu keiner Zeit durch Luftblasen verfälscht. Der erwähnte Kalibrierreflektor (12) ist insbesondere an der Innenseite der Messkammer (4) unterhalb des minimal zu messenden Pegels ausgebildet.

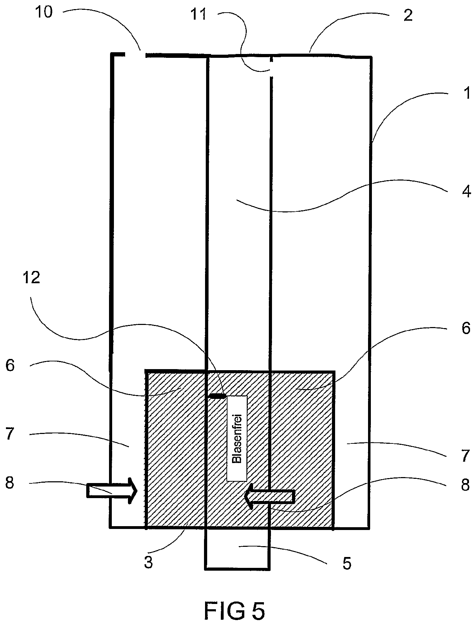

Fig. 5 zeigt die Situation, in der das Öl aus dem Sensor und aus der Ölwanne des Motors abgelassen ist, was zum Beispiel bei einem Ölwechsel vorkommt. In der Messkammer (4) und in der vorgelagerten Kammer (6) findet sich nur blasenfreies Öl. Nach der Neubefüllung der Ölwanne und damit des Sensors kann sofort mit der Messung des Pegels begonnen werden.

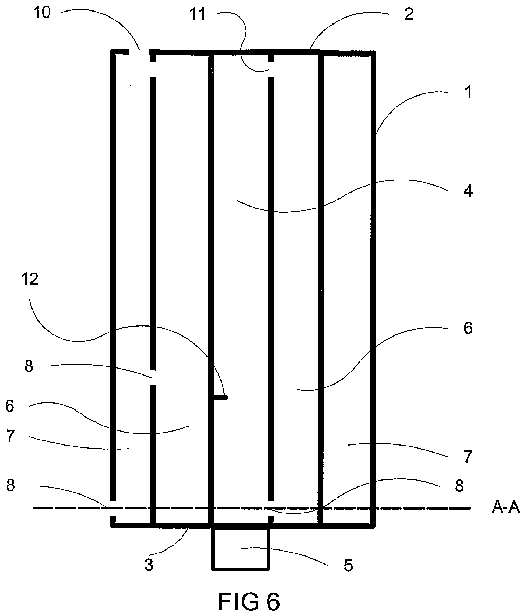

Fig. 6 zeigt einen Sensor wie in den Fig. 1 bis 5, mit dem Unterschied, dass sich hier die Außenseite der Kammer (6) bis zum Deckel (2) erstreckt. Das Öl gelangt von der Einlasskammer (7) durch eine Öffnung (8) in einer Höhe knapp unterhalb des minimal zu messenden Flüssigkeitspegels in die Kammer (6). Die relative Lage der Öffnungen (8) in der Einlasskammer (7), der vorgelagerten Kammer (6) und der Messkammer (4) ist bei dieser Ausführungsform insbesondere willkürlich. Der Querschnitt der Öffnungen (8) und die Anzahl der Öffnungen (8) pro Kammer (4, 6, 7) kann untereinander variieren und beeinflusst die Fließgeschwindigkeit des Öls im Sensor. Die Entlüftungsöffnung (11) ist an der Außenseite der Kammer (6) nahe dem Deckel (2) angeordnet.

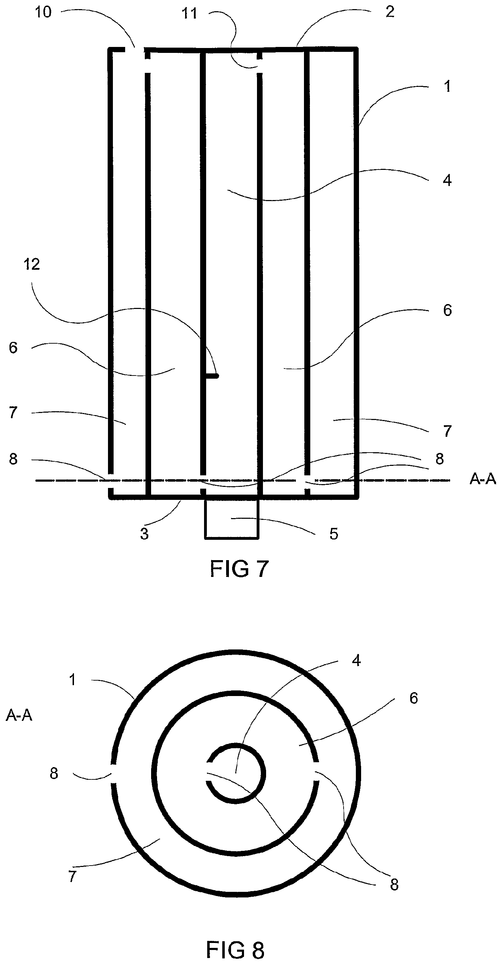

Fig. 7 und 8 zeigen eine weitere Ausführungsform des Sensors. Die Öffnungen (8) in der Außenseite jeder Kammer (4, 6, 7) sind jeweils in der Nähe des Bodens (3) angeordnet. Das hat den Vorteil, dass bei einem Austausch des Öls mögliche Ablagerungen wie Ölschlamm und Späne weitgehend mit ausgeschwemmt werden. Vorzugsweise sind die in Richtung Messkammer (4) aufeinander folgenden Öffnungen (8) möglichst weit voneinander entfernt. Dadurch wird der Weg, den das Öl bis in die Messkammer (4) zurücklegen muss bei dieser Ausführungsform des Sensors möglichst lang. Das Öl kann sich aber beim Eintritt in eine Kammer (6, 7) zum Teil im Uhrzeigersinn und zum Teil gegen den Uhrzeigersinn auf die Öffnung (8) in die nächste Kammer (6, 7) zubewegen.

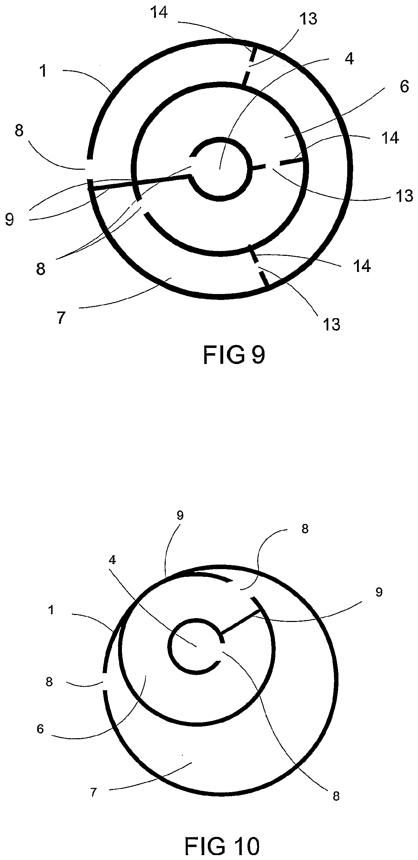

Die Verweildauer des Öls in einer Kammer (6, 7) wird erfindungsgemäß durch Einführen einer Trenneinrichtung (9), wie in Fig. 9 gezeigt, verlängert. Die Trenneinrichtung (9) in der Einlasskammer (7) liegt rechts von der Öffnung (8). Dadurch ist in der Einlasskammer(7) die Fließrichtung in die nächste Kammer (6) im Uhrzeigersinn vorgegeben. Die Trenneinrichtung (9) in der nächsten Kammer (6) liegt links von der Öffnung (8) in diese Kammer (6). Somit ist in dieser Kammer(7) die Fließrichtung gegen den Uhrzeigersinn vorgegeben. Dadurch, dass die Öffnungen (8) und die Trenneinrichtungen (9) in der Draufsicht in einem engen Winkelbereich liegen und die Trenneinrichtungen (9) zweier aufeinander folgender Kammern (6, 7) abwechselnd einmal links und einmal rechts von der jeweiligen Öffnung (8) liegen, ist in diesem Beispiel die Zeit, die das Öl vom Eintritt in die Einlasskammer (7) bis in die Messkammer (4) benötigt, am längsten. Die Anordnung der Trenneinrichtungen (9) und der Öffnungen (8) kann natürlich von Ausführungsform zu Ausführungsform variieren. Eine Trenneinrichtung (9) kann beispielsweise durch einen Trennsteg (9), der innerhalb einer Kammer (6, 7) von einer Wand zur anderen Wand verläuft, realisiert sein. Die Trenneinrichtung (9) muss insbesondere höher sein als der maximal mögliche Ölpegel. Verzugsweise erstreckt sich die Trenneinrichtung (9) vom Boden (3) bis zum Deckel (2). Die Fließgeschwindigkeit kann auch durch Anordnung wenigstens eines Zwischensteges (14) innerhalb einer Kammer (6, 7) beeinflusst werden. Für die Höhe eines Zwischenstegs (14) gilt das gleiche wie für einen Trennsteg (9). Im Gegensatz zum Trennsteg (9) ist ein Zwischensteg (14) aber für das Öl durchlässig. Dazu ist im Zwischensteg (14), vorzugsweise nahe dem Boden, eine Zwischenöffnung (13) angeordnet. Die Anzahl der Zwischenstege (14) pro Kammer (6, 7) und der Querschnitt und die Anzahl der Zwischenöffnungen (13) kann je nach Anforderung variieren. In Fig. 9 sind in der Einlasskammer (7) zwei Zwischenstege (14), in der Kammer (6) ein Zwischensteg (14) vorgesehen. Die Öffnungen (8) zum Ein- und Ausströmen des Öls in und aus einer Kammer (4, 6, 7) und die Zwischenöffnungen (13) liegen hier insbesondere in einer Ebene. Das ist aber nicht zwingend.

In Fig. 10 wird die Trenneinrichtung (9) in der Einlasskammer (7) dadurch gebildet, dass sich die Außenseiten der aufeinander folgenden Einlasskammer (7) und der Kammer (6) zumindest an einer Stelle, hier über einen kleinen Teil des Umfangs, berühren. Auch dadurch wird die Fließrichtung in der Einlasskammer (7) vorgegeben. In der Kammer (6) ist links neben der Öffnung (8) in diese Kammer (6) ein Trennsteg (9) vorgesehen. Die Öffnung (8) in die Kammer (6) muss nicht in der Ebene der Öffnung (8) in die Einlasskammer (7) oder in die Messkammer (4) liegen.

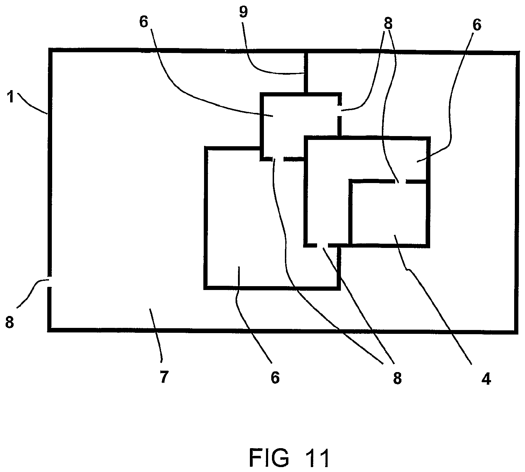

Fig. 11 zeigt eine Draufsicht auf einen Sensor mit rechteckigem Querschnitt. Die Einlasskammer (7) ist um die Messkammer (4), die Kammern (6) sind zumindest teilweise vor oder um die Messkammer (4) angeordnet.

Der beschriebene Mehrkammerultraschallsensor garantiert eine Beruhigung des Öls im Sensor und eine blasenfreie Messkammer.

Die vorliegende Erfindung wurde anhand der vorstehenden Beschreibung so dargestellt, um das Prinzip der Erfindung und dessen praktische Anwendung bestmöglich zu erklären. Jedoch lässt sich die Erfindung bei geeigneter Abwandlung selbstverständlich in zahlreichen anderen Ausführungsformen und Kombinationen im Umfang der Ansprüche realisierten.

### Bezugszeichenliste:

- 1: Gehäuse
- 2: Deckel
- 3: Boden
- 4: Messkammer
- 5: Ultraschall-Sendeempfänger
- 6: Kammer
- 7: Einlasskammer
- 8: Öffnung zum Ein- und Ausströmen der Flüssigkeit
- 9: Trenneinrichtung
- 10: Gehäuseentlüftungsöffnung
- 11: Entlüftungsöffnung
- 12: Kalibrierreflektor
- 13: Zwischenöffnung
- 14: Zwischensteg

## Patentansprüche

1. Ultraschallsensor zur Bestimmung eines Flüssigkeitspegels mit
- einem langgestreckten Gehäuse (1), das einen Deckel (2) und einen Boden (3) aufweist,
- einer Messkammer (4), im Gehäuse (1) angeordnet, in der eine Flüssigkeit den gleichen Pegel aufweist wie außerhalb der Messkammer (4),
- einem Ultraschall-Sendeempfänger (5) am Boden (3) innerhalb oder außerhalb des Gehäuses (1) im Bereich der Messkammer (4), dessen ausgesendete Schallsignale an der Oberflache der Flüssigkeit reflektieren und vom Ultraschall-Sendeempfänger (5) empfangen werden, um aus der Signallaufzeit den Flüssigkeitspegel zu ermitteln,
wobei im Gehäuse (1) neben der Messkammer (4) wenigstens zwei weitere Kammern (6, 7) zumindest teilweise vor der Messkammer (4) oder zumindest teilweise um die Messkammer (4) angeordnet sind, wobei die äußerste Kammer die Einlasskammer (7) bildet, wobei die Kammern (4, 6 , 7) miteinander in Verbindung stehen und wobei die Kammern seitlich, jeweils in einer Höhe nahe dem Boden (3) des Gehäuses (1), eine Öffnung (8) zum Ein- und Ausströmen der Flüssigkeit aufweisen, **dadurch gekennzeichnet, dass** dass wenigstens in einer Kammer (4, 6, 7) eine Trenneinrichtung (9) vorgesehen ist, die die Fließrichtung der Flüssigkeit auf ihrem Weg von einer Kammer (4, 6, 7) in die nächste Kammer (4, 6, 7) durch die jeweilige Öffnung (8) vorgibt.

2. Ultraschallsensor nach Anspruch 1, **dadurch gekennzeichnet, dass** wenigstens eine Gehäuseentlüftungsöffnung (10) im Deckel (2) oder an einer Außenseite der Einlasskammer (7) in einer Höhe nahe am Deckel (2) angeordnet ist.

3. Ultraschallsensor nach einem der vorangehenden Ansprüche, **dadurch gekennzeichnet, dass** der Deckel (2) wenigstens im Bereich der Messkammer (4) geschlossen ist.

4. Ultraschallsensor nach einem der vorangehenden Ansprüche, **dadurch gekennzeichnet, dass** die Messkammer (4) an einer Außenseite in einer Höhe nahe dem Deckel (2), oberhalb des maximal messbaren Flüssigkeitspegels, wenigstens eine Entlüftungsöffnung (1 1) aufweist.

5. Ultraschallsensor nach einem der vorangehenden Ansprüche, **dadurch gekennzeichnet, dass** in der Messkammer (4) unterhalb des minimal möglichen Flüssigkeitspegels ein Kalibrierreflektor (12) angeordnet ist und der Flüssigkeitspegel aus dem Laufzeitverhältnis des an der Oberfläche der Flüssigkeit und am Kalibrierreflektor (12) reflektierten Signals ermittelbar ist.

6. Ultraschallsensor nach einem der vorangehenden Ansprüche, **dadurch gekennzeichnet, dass** der Querschnitt wenigstens einer Kammer (4, 6, 7) im Wesentlichen rund oder rechteckig ist.

7. Ultraschallsensor nach einem der vorangehenden Ansprüche, **dadurch gekennzeichnet, dass** die Außenseiten der Kammern (6), die zwischen der Einlasskammer (7) und der Messkammer (4) angeordnet sind, als Wände ausgestaltet sind, die sich vom Boden (3) höchstens bis zu einer Höhe knapp unterhalb des minimal messbaren Flüssigkeitspegels erstrecken.

8. Ultraschallsensor nach Anspruch 7, **dadurch gekennzeichnet, dass** die Höhe und die Länge der Außenseite der Kammer (6), die der Messkammer (4) am nächsten ist, so bemessen sind, dass das Fassungsvermögen dieser Kammer (6) grösser ist, als das Fassungsvermögen der Messkammer (4) selbst.

9. Ultraschallsensor nach einem der Ansprüche 1 bis 6, **dadurch gekennzeichnet, dass** die Außenseite der Kammern (6), die zwischen der Einlasskammer (7) und der Messkammer (4) angeordnet sind, sich vom Boden (3) bis zum Deckel (2) erstrecken, dass an der Außenseite dieser Kammern (6) nahe dem Deckel (2) wenigstens eine Entlüftungsöffnung (1 1) angeordnet ist, und dass an der Außenseite zumindest der Kammer (6), die der Messkammer (4) am nächsten ist, zwischen Boden (3) und Deckel (2) in einer Höhe unterhalb des minimal messbaren Flüssigkeitspegels wenigstens eine Öffnung (8) zum Ein- und Ausströmen der Flüssigkeit angeordnet ist.

10. Ultraschallsensor nach Anspruch 9, **dadurch gekennzeichnet, dass** die Höhe , in der die Zwischenöffnung (13) angeordnet ist, und die Länge der Außenseite der Kammer (6), die der Messkammer am nächsten ist, so bemessen sind, dass das Fassungsvermögen dieser Kammer (6) grösser ist, als das Fassungsvermögen der Messkammer (4) selbst.

11. Ultraschallsensor nach einem der Ansprüche 1 bis 6 , **dadurch gekennzeichnet, dass** die Außenseiten der Kammern (6), die zwischen der Einlasskammer (7) und der Messkammer (4) angeordnet sind, als Wände ausgestaltet sind, die sich vom Boden (3) wenigstens bis zu einer Höhe oberhalb des maximal messbaren Flüssigkeitspegels erstrecken und dass diese Außenseiten der Kammern (6) in einer Höhe nahe dem Boden (3) des Gehäuses (1) jeweils eine Öffnung (8) zum Ein- und Ausströmen der Flüssigkeit aufweisen.

12. Ultraschallsensor nach Anspruch 11, **dadurch gekennzeichnet, dass** die Öffnungen (8) derart angeordnet sind, dass die in Richtung Messkammer (4) aufeinanderfolgenden Öffnungen (8) möglichst weit voneinander entfernt liegen.

13. Ultraschallsensor nach einem der Ansprüche 1 bis 6 , **dadurch gekennzeichnet, dass** die Außenseiten der Kammern (6), die zwischen der Einlasskammer (7) und der Messkammer (4) angeordnet sind, sich vom Boden (3) bis zum Deckel (2) erstrecken und dass diese Außenseiten der Kammern (6) in einer Höhe nahe dem Boden (3) des Gehäuses (1) jeweils eine Öffnung (8) zum Ein- und Ausströmen der Flüssigkeit und nahe dem Deckel (2) eine Entlüftungsöffnung (1 1) aufweisen.

14. Ultraschallsensor nach Anspruch 13, **dadurch gekennzeichnet, dass** die Öffnungen (8) derart angeordnet sind, dass die in Richtung Messkammer (4) aufeinanderfolgenden Öffnungen (8) möglichst weit voneinander entfernt liegen.

15. Ultraschallsensor nach einem der vorhergehenden Ansprüche, **dadurch gekennzeichnet, dass** die Trenneinrichtung (9) durch einen Trennsteg (9) realisiert ist.

16. Ultraschallsensor nach einem der Ansprüche 1 bis 14, **dadurch gekennzeichnet, dass** die Trenneinrichtung (9) dadurch realisiert ist, dass sich jeweils die Außenseiten zweier aufeinanderfolgender Kammern (4, 6, 7) zumindest an einer Stelle berühren.

17. Ultraschallsensor nach einem der vorhergehenden Ansprüche, **dadurch gekennzeichnet, dass** jede Kammer (6, 7) wenigstens einen Zwischensteg (14) aufweist, wobei am Zwischensteg (9), in einer Höhe nahe dem Boden (3) des Gehäuses (1), eine Zwischenöffnung (13) zum Ein- und Ausströmen der Flüssigkeit angeordnet ist.

18. Ultraschallsensor nach einem der vorhergehenden Ansprüche, **dadurch gekennzeichnet, dass** die Trenneinrichtungen (9) und die Zwischenstege (14) höher sind als der maximal messbare Flüssigkeitspegel.

## Claims

1. Ultrasonic sensor for determining a liquid level, having
- an elongated housing (1), which has a cover (2) and a bottom (3)
- a measuring chamber (4), arranged in the housing (1), in which a liquid has the same level as outside the measuring chamber (4),
- an ultrasonic transceiver (5) on the bottom (3), inside or outside the housing (1) in the area of the measuring chamber (4), the emitted sound signals therefrom reflecting on the surface of the liquid and being received by the ultrasound transceiver (5), in order to determine the liquid level from the signal propagation time,
at least two further chambers (6, 7) being arranged in the housing (1) beside the measuring chamber (4), at least partly in front of the measuring chamber (4) or at least partly around the measuring chamber (4), the outermost chamber forming the inlet chamber (7), the chambers (4, 6, 7) being connected to one another, and the chambers having an opening (8) for the liquid to flow in and out at the side, each at a height close to the bottom (3) of the housing (1),
**characterized in that** a separating device (9) is provided in at least one chamber (4, 6, 7), which predefines the direction of flow of the liquid on its path from one chamber (4, 6, 7) into the next chamber (4, 6, 7) through the respective opening (8).

2. Ultrasonic sensor according to Claim 1, **characterized in that** at least one housing ventilation opening (10) is arranged in the cover (2) or on an outer side of the inlet chamber (7), at a height close to the cover (2).

3. Ultrasonic sensor according to one of the preceding claims, **characterized in that** the cover (2) is closed, at least in the area of the measuring chamber (4).

4. Ultrasonic sensor according to one of the preceding claims, **characterized in that** the measuring chamber (4) has at least one ventilation opening (11) on an outer side at a height close to the cover (2), above the maximum measurable liquid level.

5. Ultrasonic sensor according to one of the preceding claims, **characterized in that** a calibration reflector (12) is arranged in the measuring chamber (4) below the minimum possible liquid level, and the liquid level can be determined from the propagation time ratio of the signal reflected at the surface of the liquid and at the calibration reflector (12).

6. Ultrasonic sensor according to one of the preceding claims, **characterized in that** the cross section of at least one chamber (4, 6, 7) is substantially round or rectangular.

7. Ultrasonic sensor according to one of the preceding claims, **characterized in that** the outer sides of the chambers (6) which are arranged between the inlet chamber (7) and the measuring chamber (4) are configured as walls, which extend from the bottom (3) at most as far as a height slightly below the minimum measurable liquid level.

8. Ultrasonic sensor according to Claim 7, **characterized in that** the height and the length of the outer side of the chamber (6) which is closest to the measuring chamber (4) are dimensioned such that the volumetric capacity of this chamber (6) is greater than the volumetric capacity of the measuring chamber (4) itself.

9. Ultrasonic sensor according to Claims 1 to 6, **characterized in that** the outer sides of the chambers (6) which are arranged between the inlet chamber (7) and the measuring chamber (4) extend from the bottom (3) as far as the cover (2), **in that** at least one ventilation opening (11) is arranged on the outer side of the chambers (6), close to the cover (2), and **in that** at least one opening (8) for the liquid to flow in and out is arranged on the outer side of at least that chamber (6) which is closest to the measuring chamber (4), between bottom (3) and cover (2) at a height below the minimum measurable liquid level.

10. Ultrasonic sensor according to Claim 9, **characterized in that** the height at which the intermediate opening (13) is arranged and the length of the outer side of the chamber (6) which is closest to the measuring chamber are dimensioned such that the volumetric capacity of this chamber (6) is greater than the volumetric capacity of the measuring chamber (4) itself.

11. Ultrasonic sensor according to one of Claims 1 to 6, **characterized in that** the outer sides of the chambers (6) which are arranged between the inlet chamber (7) and the measuring chamber (4) are configured as walls, which extend from the bottom (3) at least as far as a height above the maximum measurable liquid level, and **in that** the outer sides of the chambers (6) each have an opening (8) for the liquid to flow in and out at a height close to the bottom (3) of the housing (1).

12. Ultrasonic sensor according to Claim 11, **characterized in that** the openings (8) are arranged in such a way that the openings (8) following one another in the direction of the measuring chamber (4) lie as far as possible from one another.

13. Ultrasonic sensor according to one of Claims 1 to 6, **characterized in that** the outer sides of the chambers (6) which are arranged between the inlet chamber (7) and the measuring chamber (4) extend from the bottom (3) as far as the cover (2), and **in that** the outer sides of the chambers (6) each have an opening (8) for the liquid to flow in and out at a height close to the bottom (3) of the housing (1), and a ventilation opening (11) close to the cover (2).

14. Ultrasonic sensor according to Claim 13, **characterized in that** the openings (8) are arranged in such a way that the openings (8) following one another in the direction of the measuring chamber (4) lie as far as possible from one another.

15. Ultrasonic sensor according to one of the preceding claims, **characterized in that** the separating device (9) is implemented by a separating web (9).

16. Ultrasonic sensor according to one of Claims 1 to 14, **characterized in that** the separating device (9) is implemented **in that** in each case the outer sides of two successive chambers (4, 6, 7) touch, at least at a point.

17. Ultrasonic sensor according to one of the preceding claims, **characterized in that** each chamber (6, 7) has at least one intermediate web (14), an intermediate opening (13) for the liquid to flow in and out being arranged on the intermediate web (9), at a height close to the bottom (3) of the housing (1).

18. Ultrasonic sensor according to one of the preceding claims, **characterized in that** the separating devices (9) and the intermediate webs (14) are higher than the maximum measurable liquid level.

## Revendications

1. Capteur à ultrasons destiné à déterminer le niveau d'un liquide, et présentant
un boîtier allongé (1) qui présente un couvercle (2) et un fond (3),
une chambre de mesure (4) disposée dans le boîtier (1) et dans lequel un liquide présente le même niveau qu'à l'extérieur de la chambre de mesure (4),
un émetteur-récepteur (5) d'ultrasons prévu dans le fond (3), à l'intérieur ou à l'extérieur du boîtier (1), au niveau de la chambre de mesure (4), et dont les signaux acoustiques émis sont réfléchis à la surface du liquide et reçus par l'émetteur-récepteur (5) d'ultrasons pour déterminer le niveau du liquide sur la base du temps de parcours des signaux,
au moins deux autres chambres (6, 7) étant disposées dans le boîtier (1) à côté de la chambre de mesure (4), au moins en partie en avant de la chambre de mesure (4) ou au moins en partie autour de la chambre de mesure (4), la chambre extérieure formant la chambre d'admission (7), les chambres (4, 6, 7) communiquant les unes avec les autres, les chambres présentant toutes à une hauteur proche du fond (3) du boîtier (1) une ouverture (8) permettant l'entrée et la sortie du liquide,
**caractérisé en ce que**
un dispositif de séparation (9) qui définit la direction d'écoulement du liquide dans son parcours depuis une chambre (4, 6, 7) jusque dans la chambre (4, 6, 7) voisine par l'ouverture (8) est prévu au moins dans une chambre (4, 6, 7).

2. Capteur à ultrasons selon la revendication 1, **caractérisé en ce qu'**au moins une ouverture (10) d'évent du boîtier est disposée dans le couvercle (2) ou sur un côté extérieur de la chambre d'admission (7) à une hauteur proche du couvercle (2).

3. Capteur à ultrasons selon l'une des revendications précédentes, **caractérisé en ce que** le couvercle (2) est fermé au moins au niveau de la chambre de mesure (4).

4. Capteur à ultrasons selon l'une des revendications précédentes, **caractérisé en ce que** la chambre de mesure (4) présente sur un côté extérieur, à une hauteur proche du couvercle (2) et au-dessus du niveau maximum mesurable de liquide au moins une ouverture d'évent (11).

5. Capteur à ultrasons selon l'une des revendications précédentes, **caractérisé en ce qu'**un réflecteur d'étalonnage (12) est disposé dans la chambre de mesure (4) en dessous du niveau minimum possible de liquide et **en ce que** le niveau de liquide peut être déterminé à partir du rapport entre le temps de parcours du signal réfléchi à la surface du liquide et du signal réfléchi sur le réflecteur d'étalonnage (12).

6. Capteur à ultrasons selon l'une des revendications précédentes, **caractérisé en ce que** la section transversale d'au moins une chambre (4, 6, 7) est essentiellement circulaire ou rectangulaire.

7. Capteur à ultrasons selon l'une des revendications précédentes, **caractérisé en ce que** les côtés extérieurs des chambres (6) disposées entre la chambre d'admission (7) et la chambre de mesure (4) sont configurés comme parois qui s'étendent depuis le fond (3) au plus jusqu'à une hauteur située juste en dessous du niveau minimum mesurable de liquide.

8. Capteur à ultrasons selon la revendication 7, **caractérisé en ce que** la hauteur et la longueur du côté extérieur de la chambre (6) située la plus proche de la chambre de mesure (4) sont dimensionnées de telle sorte que la capacité de saisie de cette chambre (6) est supérieure à la capacité de saisie de la chambre de mesure (4) proprement dite.

9. Capteur à ultrasons selon l'une des revendications 1 à 6, **caractérisé en ce que** les côtés extérieurs des chambres (6) disposées entre la chambre d'admission (7) et la chambre de mesure (4) s'étendent depuis le fond (3) jusqu'au couvercle (2), **en ce que** sur les côtés extérieurs de ces chambres (6), à proximité du couvercle (2), au moins une ouverture d'évent (11) est disposée et **en ce que** sur le côté extérieur d'au moins une chambre (6) la plus proche de la chambre de mesure (4), entre le fond (3) et le couvercle (2), à une hauteur située en dessous du niveau minimum mesurable de liquide, au moins une ouverture (8) permettant l'entrée et la sortie du liquide est disposée.

10. Capteur à ultrasons selon la revendication 9, **caractérisé en ce que** la hauteur à laquelle l'ouverture intermédiaire (13) est disposée et la longueur du côté extérieur de la chambre (6) la plus proche de la chambre de mesure sont dimensionnées de telle sorte que la capacité de reprise de cette chambre (6) est plus grande que la capacité de reprise de la chambre de mesure (4) proprement dite.

11. Capteur à ultrasons selon l'une des revendications 1 à 6, **caractérisé en ce que** les côtés extérieurs des chambres (6) qui sont disposées entre la chambre d'admission (7) et la chambre de mesure (4) sont configurés comme parois qui s'étendent depuis le fond (3) jusqu'à au moins une hauteur située au-dessus du niveau maximum mesurable de liquide et **en ce que** ces côtés extérieurs des chambres (6) présentent à une hauteur proche du fond (3) du boîtier (1) une ouverture (8) permettant l'entrée et la sortie du liquide.

12. Capteur à ultrasons selon la revendication 11, **caractérisé en ce que** les ouvertures (8) sont disposées de telle sorte que les ouvertures (8) successives en direction de la chambre de mesure (4) sont éloignées le plus possible les unes des autres.

13. Capteur à ultrasons selon l'une des revendications 1 à 6, **caractérisé en ce que** les côtés extérieurs des chambres (6) qui sont disposées entre la chambre d'admission (7) et la chambre de mesure (4) s'étendent depuis le fond (3) jusqu'au couvercle (2) et **en ce que** ces côtés extérieurs des chambres (6) présentent à une hauteur proche du fond (3) du boîtier (1) une ouverture (8) permettant l'entrée et la sortie du liquide et présentent une ouverture d'évent (11) à proximité du couvercle (2).

14. Capteur à ultrasons selon la revendication 13, **caractérisé en ce que** les ouvertures (8) sont disposées de telle sorte que les ouvertures (8) successives en direction de la chambre de mesure (4) sont éloignées le plus possible les unes des autres.

15. Capteur à ultrasons selon l'une des revendications précédentes, **caractérisé en ce que** le dispositif de séparation (9) est réalisé par une paroi de séparation (9).

16. Capteur à ultrasons selon l'une des revendications 1 à 14, **caractérisé en ce que** le dispositif de séparation (9) est réalisé de telle sorte que les côtés extérieurs des deux chambres (4, 6, 7) successives se touchent en au moins un emplacement.

17. Capteur à ultrasons selon l'une des revendications précédentes, **caractérisé en ce que** chaque chambre (6, 7) présente au moins une chicane intermédiaire (14), une ouverture intermédiaire (13) permettant l'entrée et la sortie du liquide étant disposée sur la chicane intermédiaire (9) à une hauteur proche du fond (3) du boîtier (1).

18. Capteur à ultrasons selon l'une des revendications précédentes, **caractérisé en ce que** le dispositif de séparation (9) et les chicanes intermédiaires (14) sont plus hautes que le niveau maximum mesurable de liquide.
